Europäisches Patentamt

(19) European Patent Office

Office européen des brevets

(11) Publication number: **0 045 213**
**B1**

# (12) EUROPEAN PATENT SPECIFICATION

(45) Date of publication of patent specification: 09.11.83

(21) Application number: 81303443.6

(22) Date of filing: 27.07.81

(51) Int. Cl.³: **B 29 C 27/00,**
**H 02 G 15/08, F 16 L 59/14**

(54) Heat recoverable article and process for producing the same.

(30) Priority: 28.07.80 GB 8024620

(43) Date of publication of application:
03.02.82 Bulletin 82/5

(45) Publication of the grant of the patent:
09.11.83 Bulletin 83/45

(84) Designated Contracting States:
AT BE CH DE FR IT LI NL SE

(56) References cited:
EP - A - 0 023 418
DE - A - 2 600 647
DE - A - 2 653 940
DE - A - 2 906 450
DE - A - 2 937 749
DE - B - 1 162 543
DE - B - 2 832 485
FR - A - 1 591 785
US - A - 3 455 336
US - A - 3 587 657

(73) Proprietor: RAYCHEM LIMITED
ROLLS HOUSE 7, Rolls Buildings Fetter Lane
London, EC4 1NL (GB)

(72) Inventor: Changani, Pushpkumar
Ila Dores Road
Upper Stratton Swindon Wiltshire (GB)
Inventor: Peacock, Donald George
Paradise Cottage
Kempsford Gloucestershire (GB)
Inventor: Roberts, David
Stonestack 10, Crabtree Drive
Givons Grove Leatherhead Surrey (GB)

(74) Representative: Jay, Anthony William et al,
Raychem Limited Patent & Legal Department
Faraday Road Dorcan
Swindon Wiltshire (GB)

Courier Press, Leamington Spa, England.

## Heat recoverable article and process for producing the same

The present invention relates to heat-recoverable polymeric wraparound closure articles, that is to say polymeric articles the dimensional configuration of which may be made to change by subjecting to heat, and a method for producing the same.

Heat-recoverable wraparound closures are employed for sealing, insulating or otherwise protecting a substrate where the use of a preformed tubular closure, such as a sleeve, is not possible or convenient, e.g. in the case where the end of an elongate substrate is not accessible. In general, such wraparound closure comprise at least a portion thereof which is adapted to be wrapped around a substrate to be covered and secured in tubular form by closure means. Thereafter, the wraparound closure may be heat-recovered tightly onto the substrate by the application of heat.

Examples of heat-recoverable wraparound closures are described in US Patents 3,379,218, 3,455,336, 3,530,898, 3,542,079 and 3,574,318 and in British Patents 1,219,768 and 1,266,719 the disclosures of which are incorporated herein by reference. In general, the closure means employed in wraparound closures comprises at least one longitudinally extending profiled closure means extending along an edge region of the wrap-around closure and interrupting the otherwise flat surface of said portion, e.g. a longitudinally extending rib.

Wraparound closures have hitherto generally been produced by forming a polymer into the desired heat stable configuration with integrally formed closure means, e.g. by extrusion or moulding, cross-linking the polymer in its heat stable configuration, heating the polymer to a temperature above the crystalline melting point or softening point of the polymer, deforming the polymer and cooling the polymer whilst in the deformed configuration. Such production involves difficulties in that deformation of the polymer must be carried out without deformation of the integrally formed closure means, moulding of individual items is often required and even when more economical extrusion processes are possible, different sizes of product often require different extrusion dies.

The present invention has as an object the provision of a more economical process for the production of heat-recoverable wraparound closures.

Accordingly, the present invention provides a process for the production of a heat-recoverable wraparound closure having a closure means along at least one of a pair of opposed edge regions thereof which comprises deforming a body of fusion bondable polymeric material at a temperature below the softening point of the material to render it heat-recoverable, bonding parts of the body to a substrate of fusion bondable polymeric material to produce the configuration of the said closure means, and cross-linking the bond-forming parts of the deformed body and the substrate to each other.

The present invention also provides a heat-recoverable wraparound closure article comprising a body (2) of heat-recoverable polymeric material which has been cross-linked after deformation at a temperature below the softening point of the polymeric material, parts of which are bonded to a substrate of polymeric material to produce the configuration of a closure means (1) along at least one of a pair of opposed edge regions of the body, the bond-forming parts of the body and the substrate being cross-linked to each other.

The bonding of the body and substrate may be achieved via further bonding material in addition to the body and substrate, which further material is cross-linked with that of the body and substrate. Preferably, the bonding is effected by fusion of the said polymeric material, preferably in direct contact of the body with the substrate.

By the expression "fusion bonding" as employed herein is meant a process wherein the materials in the parts to be fused together are caused to flow together, e.g. welding by heat, solvents or ultrasonic or radio frequency energy, preferably with the application of pressure, either to form a homogeneous bridge between the parts in the absence of any discernible interface therebetween, or to fuse the parts with further material which is cross-linked with the material of the said parts by the cross-linking step of the process. The bonding (preferably fusion) step may be effected before or after the deformation step, preferably however after the deformation step.

The process is particularly advantageous when the polymeric material is a polymeric web in which case a plurality of separable wraparound closures may simultaneously be produced so increasing efficiency. Such polymeric web may be deformed by stretching thereof or by thermoforming the desired form(s) in the web, e.g. by vacuum forming.

Where a plurality of separable closures are simultaneously produced from a polymeric web, the closure means may be provided by bonding before separation of the closures. Preferably also, in such a case, cross-linking may be effected before separation of said closures.

Preferably the closure means comprises a pair of ribs each of which is disposed along an edge region of the closure and which are adapted to abut and co-operate in the assembled closure to provide a rail over which may be located, e.g. by sliding, a channel to secure the ribs together and maintain the wraparound closure intact.

Said ribs may each be formed by bonding along an edge region of the body sheet a strip substrate of polymeric material. Alternatively, said ribs may each be formed by bonding an edge region of the polymeric body sheet material to itself, preferably around a rigid former, e.g. a polymeric or metal rod, in which case said edge region may be bonded to itself and/or to the former to hold the former in place.

Preferably the or one of the closure means is spaced apart from an edge of the polymeric material to provide a flap adapted to underlie the wraparound closure on assembly thereof and so improve environmental sealing.

The process is applicable to both crystalline and non-crystalline polymers, softening point (by which is meant the crystalline melting point for crystalline polymers) being selected accordingly as the maximum deformation temperature.

By "fusion bondable" polymeric materials as employed herein is meant not cross-linked to the extent that the material cannot be readily bonded to itself or to another polymeric component by fusing. In general, the level of cross-linking in the polymeric material expressed in terms of gel content (ANSI/ASTM D2765—68) is preferably less than 40%, more preferably less than 20%, particularly less than 5%. When cross-linking in accordance with the process, preferably gel contents of at least 40%, e.g. at least 50%, particularly at least 65% are attained.

Preferably, the cross-linking cross links substantially all of the polymeric material in addition to the bond forming material. Cross-linking is performed after the deforming and bonding steps, but could be effected after the deformation step and during the bonding step. Of particular interest is a process wherein the said substrate to which part of the said body is bonded is another part of the said body, e.g. as indicated above, or may be a web which is expanded longitudinally by the deformation step. Also of interest is a process wherein the said substrate to which part of the said body is bonded is initially separate from the said body, e.g. a separate strip or former as indicated above.

One advantage of the articles of the invention is that they are substantially recoverable, e.g. recoverable to at least 50% of their maximum extent, at a temperature below the crystalline melting point or softening point of the polymeric material from which they have been produced, e.g. in the range 60°C to the crystalline melting point or softening point.

The heat-recoverable wraparound closures produced in accordance with the process of the invention may advantageously be coated with a sealant or adhesive, e.g. an adhesive such as a hot-melt adhesive or a sealant such as a mastic (such as described in UK Patent No. 1,116,878 the disclosure of which is incorporated herein by reference). The application of the adhesive or sealant may be effected before, during, or after the process of the invention by appropriate choice of adhesive or sealant and process conditions. For example, a hot-melt adhesive or mastic may be applied to the non-cross-linked polymeric material before the bonding step and thereafter the parts to be bonded together locally heated and pressed together to locally displace the adhesive or sealant in the regions to be bonded together.

Alternatively, the adhesive or sealant may be applied after the bonding step and, where the process involves producing a plurality of separable closures, the adhesive or sealant is preferably applied before separation of the articles.

Any cross-linkable polymeric material to which the property of dimensional recoverability may be imparted such as those disclosed in UK Specification No. 990,235 may be used to form the articles. Polymers which may be used in the polymeric material include polyolefins such as polyethylene and polypropylene, and ethylene copolymers, for example with propylene, butene, hexene, octene, vinyl acetate or other vinyl esters or methyl or ethyl acrylate, polyamides, polyurethanes, polyvinyl chloride, polyvinylidene fluoride, or other fluorinated polymers or copolymers, e.g. Tefzel (trade name—commercially available from Dupont), elastomeric materials such as those disclosed in UK Specification Nos. 1,284,082 and 1,294,665. The polymeric materials can be tailored to suit the intended use by the addition of fillers, e.g. semiconducting fillers or anti-tracking agents, flame retardants, plasticisers, pigments, stabilisers and lubricants.

The polymeric material may be cross-linked by irradiation, for example, by means of an electron beam or by $\gamma$-radiation or it may be chemically cross-linked. Whichever cross-linking process is used, it may be advantageous to incorporate one or more co-curing agents from example polyunsaturated monomers such as triallyl cyanurate, triallyl isocyanurate, diallyl phthalate, ethylene glycol dimethacrylate, trimethylolpropane trimethacrylate, pentaerythritol tetramethacrylate, allyl methacrylate and vinyl methacrylate. One method of chemical cross-linking that may be used in the process according to the invention involves grafting an unsaturated hydrolysable silane on the polymer and subjecting the article to moisture during a curing stage, for example, as described in UK Patent Specification Nos. 1,286,460 and 1,357,549.

Any of the techniques conventionally employed for fusing together polymeric materials may be employed in the process of the present invention, e.g. radio frequency, ultrasonic or hot bar welding, and pressure may additionally be applied to ensure a satisfactory bond. Furthermore, it is possible to make use of the fusing operation to separate the articles one from another or from surplus polymeric starting material. For example, it is possible to use a heating/cutting device such as a hot wire cutter or a laser beam, if necessary in association with pressure applying means such as a roller.

As hereinbefore described, the process is particularly appropriate in the production of heat-recoverable wraparound closures articles for use in the electrical field, e.g. as splices and for pipe protection. In general, such products are characterised by a wall thickness before heat-recovery thereof of preferably from 0.1 to 5 mm, especially from 0.5 to 3 mm e.g. 1 to 3 mm.

Specific embodiments of the process of the invention will now be described by way of example with specific reference to the accompanying drawings wherein:

Figure 1 is a diagrammatic perspective part representation of a closure means for a wraparound closure according to a first embodiment,

Figure 2 is a diagrammatic perspective part representation means for a wraparound closure according to a second embodiment,

Figure 3 is a diagrammatic part representation of a closure means for a wraparound closure according to a second embodiment,

Figure 4 is a diagrammatic part representation of a closure means according to a third embodiment,

Figure 5 is a diagrammatic part representation of a closure means according to a fourth embodiment,

Figure 6 is a diagrammatic perspective representation of a heat-recoverable wraparound closure sleeve positioned about a pipe,

Figure 7 is a diagrammatic perspective representation of a heat-recoverable wraparound branch-off closure positioned about a cable branch-off,

Figure 8 is a diagrammatic perspective representation of a heat-recoverable wraparound "T" closure positioned about a pipe assembly "T" junction, and,

Figure 9 is a diagrammatic perspective representation of the closure of Figure 8 having been vacuum formed.

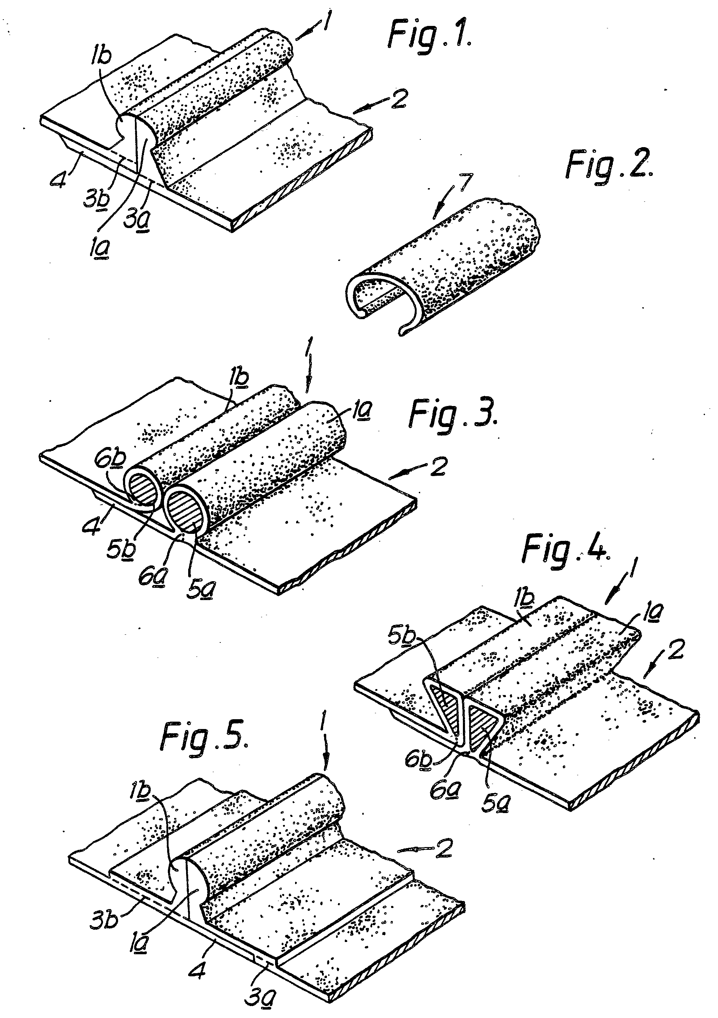

With specific reference to the embodiment shown in Figure 1, a closure means 1 is depicted comprising a pair of profiled non-cross-linked extruded polyethylene ribs 1a and 1b each of which is fused along an edge region of a non-cross-linked heat-recoverable polyethylene wraparound closure carcass 2.

The polyethylene carcass is produced from polyethylene of the desired form by stretching thereof to 4 times the original length thereof at a temperature of 100°C in a direction normal to that of the closure means and rapidly cooling whilst in the deformed condition. After deformation of the polyethylene, the closure ribs 1a and 1b are fused thereto by means of an ultrasonic welding tool. Welding may be effected over the whole area of contact 3a and 3b between the ribs 1 and the deformed polyethylene 2 or may be localised e.g. by spot welding or line welding. As will be apparent from the Figure, one rib 1b is disposed along one edge of the carcass 2, whilst the other rib 1a is spaced back therefrom to provide a flap 4 which is intended to underlie the assembled closure and so improve sealing. Also to improve sealing, as will be apparent from Figure 1, rib 1a is greater in height than rib 1b by approximately the thickness of the carcass so that the flap 4 on assembly will pass smoothly under rib 1b in the absence of a pronounced step. After the ribs 1a and 1b have been fused to the polyethylene carcass, the carcass is coated on the inner surface thereof with a sealant which is relatively insensitive to electron radiation, and thereafter, the closure is irradiated by a 1.5 MeV electron beam to a dosage of 12 Mrads.

In use, the closure is wrapped around a substrate to be enclosed such that the ribs 1a and 1b abut and co-operate to provide a rail over which may be slid a channel as shown in Figure 2 to maintain the ribs together. Thereafter, the wraparound closure may be subjected to heat, e.g. from a propane torch, to cause the closure to heat-recover about the substrate and provide a tight seal therefor.

The second embodiment depicted in Figure 3 is similar in principle to that of the first embodiment, analogous reference numerals being employed for analogous parts. In the wraparound closure of the second embodiments, however, the ribs 1a and 1b are produced by wrapping the edge regions of the carcass 2 around metal formers 5a and 5b the carcass being welded to itself along the broken lines 6a and 6b to maintain the formers in position. Assembly is effected in analogous manner to that of the first embodiment.

The third embodiment shown in Figure 4 is similar to the second embodiment with the exception that formers of triangular section are employed.

The fourth embodiment shown in Figure 5 is similar to the first embodiment hereinbefore described. In this embodiment however, rib 1a extends past the edge of the carcass to which it is welded so as to define a recess into which the flap 4 securely fits to present a smooth continuous surface to the substrate to which the closure is applied. In order to prevent flap 4 from creeping away from the edge against which it abuts on application of heat, the carcass is not deformed in the flap region, i.e. is not heat-recoverable.

In a modification of the fourth embodiment the flap 4 is formed integrally with rib 1b, the rib 1b being welded to the carcass in analogous fashion to the welding of rib 1a thereto.

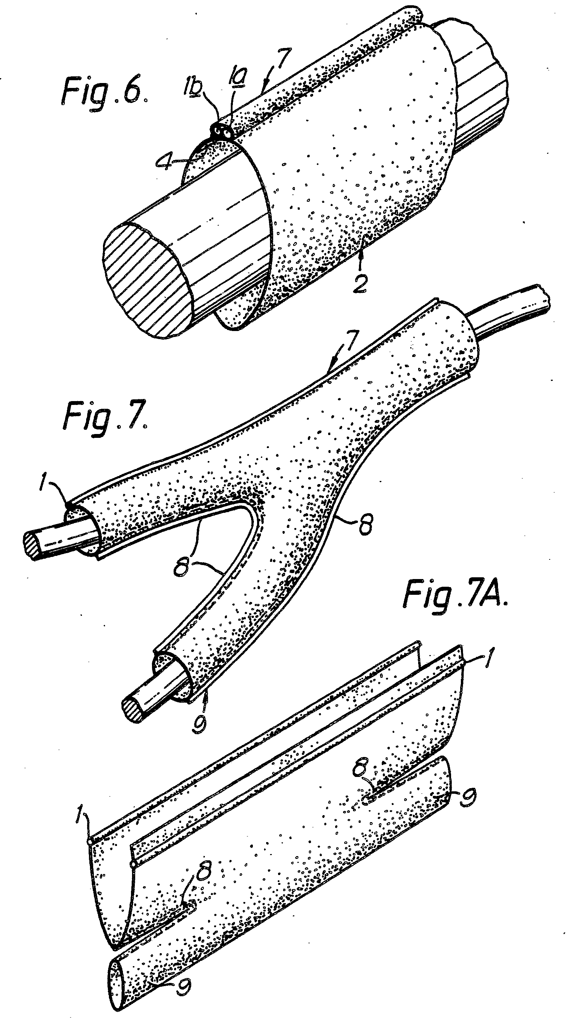

Figures 6, 7 and 8 depict different wraparound closures in which each of the closures of the first, second, third and fourth embodiments may be employed, the same reference numerals being employed for analogous parts.

In the closure depicted in Figure 6, the car-

cass 2 is formed form a continuous length of polyethylene in sheet form which has continuously been stretched by passing between rollers to produce a deformed length of sheet material from which a plurality of carcassess may be produced. To the length of a carcass so produced are welded the closure means as hereinbefore described, the sheet then being coated with sealant, subjected to electron irradiation as hereinbefore described and the sheet severed to separate the plural wraparound closures so produced. The closure depicted in Figure 6 is shown in the heat-recoverable condition thereof.

After the closure is heated, the closure is caused to recover tightly enclosing the substrate and providing a seal against the influences of the environment.

In the embodiment depicted in Figure 7 adapted to enclose a cable branch-off, the carcass again is formed from continuously stretched polyethylene sheet as described in relation to the embodiment shown in Figure 6. In this embodiment however, after fusing the closure means in the appropriate positions, two such sheets are superimposed and welded together to yield welded seams 8 to define the configuration of the closure including a tubular appendage 9. Thereafter, surplus polyethylene sheet is removed, the closures are separated one from another by severing the sheets adjacent the weld seams and then are irradiated. If desired the resulting closures may be coated with a sealant or adhesive. Figure 7A illustrates a similar branch-off closure made from a single piece of sheet with, relatively straight welds producing two tubular appendages 9 without the need to remove surplus sheet.

If desired, more than two such appendages could be formed, and their ends could be sealed for opening in use when needed.

The closure is installed by sliding the free end of the branch-off cable through the tubular appendage 9, effecting the branch-off with the main cable, assembling the wraparound closure about the main cable and applying heat to cause recovery.

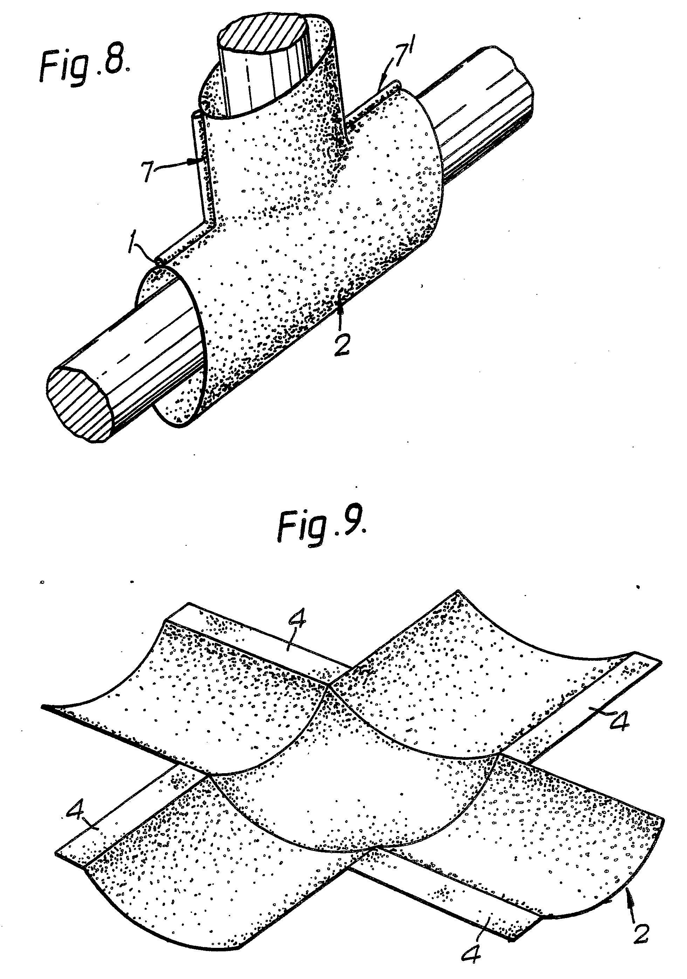

The closure depicted in Figure 8, which is employed to seal a "T"-shaped pipe junction, is supplied with two sets of closure means 7 and 7, the closure means being in accordance with any one of the first, second, third or fourth embodiments hereinbefore defined and the same reference numerals are employed for analogous parts. The carcass 2, is produced from polyethylene sheet which has been deformed by vacuum forming as shown in Figure 9 at a temperature of 100°C to provide approximately 50% expansion and thereafter rapidly cooling, the closure means then being fused to the sheet in the appropriate positions. The assembled wraparound closure is shown in Figure 8 in heat-recoverable form, the application of heat causing the closure tightly to enclose the junction.

In each of the preceding embodiments, the wall thickness of the polyethylene after deformation may be 0.1 mm, 0.5 mm, 1.0 mm, 1.5 mm, 2.0 mm, 2.5 mm, 3.0 mm, 3.5 mm, 4.0 mm, 4.5 mm, and 5.0 mm with similar results.

## Claims

1. A process for the production of a heat-recoverable wraparound closure article having a closure means along at least one of a pair of opposed edge regions thereof, which comprises deforming a body (2) of fusion bondable polymeric material at a temperature below the softening point of the material to render it heat-recoverable, bonding parts of the body to a substrate of fusion bondable polymeric material to produce the configuration of the said closure means (1) and cross-linking the bond-forming parts of the deformed body and the substrate to each other.

2. A process according to Claim 1 wherein the fusion bondable polymeric material which is deformed is in the form of a web.

3. A process according to Claim 1 or 2 wherein said closure means comprises a pair of ribs (1a, 1b) each of which is disposed along an edge region of the body and which are adapted to co-operate in the assembled wraparound closure to provide a rail over which a channel (7) may be located to maintain the closure intact.

4. A process according to Claim 3 wherein said ribs are each formed from a strip of polymeric material constituting the said substrate which is bonded to the deformed polymeric material of the said body.

5. A process according to Claim 3 wherein said ribs are each formed from an edge region of the body of deformed polymeric material which has been wrapped around a rigid former (5a, 5b) and held in place by bonding to itself and/or to the former, the part of the body and/or the former to which bonding is effected thus constituting the said substrate.

6. A process according to any one of the preceding claims wherein the or a closure means is spaced apart from an edge of the polymeric material to provide a flap (4) such that on assembly the flap underlies the wraparound closure.

7. A process according to any of claims 1 to 6 wherein the bonding is effected by fusion of the said polymeric material.

8. A process according to any of claims 1 to 7 wherein the bond-forming material includes further material in addition to the said body and the said substrate and the cross-linking cross-links the said further material with that of the said body and the said substrate.

9. A process according to any of the preceding claims, wherein the cross-linking cross-links substantially all of the said polymeric material in addition to the bond-forming material.

10. A process according to any of the preceding claims wherein the cross-linking is effected after the deforming and bonding steps.

11. A process according to any of claims 1 to 9 wherein the cross-linking is effected after the deforming step and during the bonding step.

12. A process according to any of claims 1 to 11 wherein the bonding step is performed after the deforming step.

13. A process according to any of the preceding claims, wherein the fusion bondable polymeric material before the cross-linking step has a gel content as measured by test method ANSI/ASTM D2765—68 of less than 5%.

14. A process according to any of claims 1 to 3, wherein the said substrate to which part of the said body is bonded is another part of the said body.

15. A process according to any of claims 1 to 3 wherein the said substrate to which part of the said body is bonded is initially separate from the said body.

16. A heat-recoverable wraparound closure article comprising a body (2) of heat-recoverable polymeric material which has been cross-linked after deformation at a temperature below the softening point of the polymeric material, parts of which are bonded to a substrate of polymeric material to produce the configuration of a closure means (1) along at least one of a pair of opposed edge regions of the body, the bond-forming parts of the body and the substrate being cross-linked to each other.

17. A closure according to claim 16, wherein said closure means comprises a pair of ribs (1a, 1b) each of which is disposed along an edge region of the body and which are adapted to co-operate in the assembled wraparound closure to provide a rail over which a channel (7) may be located to maintain the closure intact.

18. A closure according to claim 17, wherein said ribs are each formed from a strip of polymeric material constituting the said substrate which is bonded to the deformed polymeric material of the said body.

19. A closure according to claim 17, wherein said ribs are each formed from an edge region of the body of deformed polymeric material which has been wrapped around a rigid former (5a, 5b) and held in place by bonding to itself and/or to the former, the part of the body and/or the former to which bonding is effected thus constituting the said substrate.

20. A closure according to any of claims 16 to 19, wherein the or a closure means is spaced apart from an edge of the polymeric material to provide a flap (4) such that on assembly the flap underlies the wraparound closure.

21. A closure according to any of claims 16 to 20, wherein the body and the substrate are fusion bonded to each other or to further material which is cross-linked to the material of the body and the substrate.

## Revendications

1. Un procédé pour la fabrication d'un objet formant obturation enveloppante à reprise thermique ayant un dispositif de fermeture le long d'au moins l'une de deux régions de bord opposés de ladite obturation, qui consiste à déformer un corps (2) de matière polymère assemblable par fusion à une température inférieure au point de ramollissement de la matière pour la rendre à reprise thermique, à assembler des parties du corps à un substrat en une matière polymère assemblable par fusion pour produire la configuration dudit dispositif de fermeture (1) et à réticuler les parties formant la zone d'assemblage du corps déformé et du substrat entre elles.

2. Un procédé selon la revendication 1 suivant lequel la matière polymère assemblable par fusion qui est déformée est sous la forme d'une feuille.

3. Un procédé selon la revendication 1 ou 2 suivant lequel ledit dispositif de fermeture comprend une paire de nervures (1a, 1b) dont chacune est disposée le long d'une région de bord du corps et qui sont conçues pour coopérer dans l'obturation assemblée pour former une barre sur laquelle on peut positionner un profilé en U (7) pour maintenir l'obturation intacte.

4. Un procédé selon la revendication 3 suivant lequel chacune desdites nervures est formée à partir d'une bande de matière polymère constituant ledit substrat qui est assemblée à la matière polymère déformée dudit corps.

5. Un procédé selon la revendication 3 suivant lequel chacune desdites nervures est formée à partir d'une région de bord du corps de matière polymère déformée qui a été enveloppée autour d'un gabarit rigide (5a, 5b) et maintenue en place par assemblage à elle-même et/ou au gabarit, la partie du corps et/ou du gabarit avec laquelle l'assemblage est effectué constituant ainsi ledit substrat.

6. Un procédé selon l'une quelconque des revendications précédentes suivant lequel le ou un dispositif de fermeture est écarté d'un bord de la matière polymère pour former un volet (4) de telle sorte que, lors de l'assemblage, le volet est disposé au-dessous de la jonction de l'obturation enveloppante.

7. Un procédé selon l'une quelconque des revendications 1 à 6 suivant lequel l'assemblage est effectué par fusion de ladite matière polymère.

8. Un procédé selon l'une quelconque des revendications 1 à 7 suivant lequel la matière formant la zone d'assemblage comporte une matière supplémentaire en plus dudit corps et dudit substrat et la réticulation réticule ladite autre matière avec celles dudit corps et dudit substrat.

9. Un procédé selon l'une quelconque des revendications précédentes suivant lequel la réticulation réticule sensiblement la totalité de ladite matière polymère en plus de la matière formant la zone de collage.

10. Un procédé selon l'une quelconque des revendications précédentes suivant lequel la réticulation est effectuée après les étapes de déformation et de collage.

11. Un procédé selon l'une quelconque des revendications 1 à 9 suivant lequel la réticulation est effectuée après l'étape de déformation et pendant l'étape d'assemblage.

12. Un procédé selon l'une quelconque des revendications 1 à 11, suivant lequel l'étape d'assemblage est effectuée après l'étape de déformation.

13. Un procédé selon l'une quelconque des revendications précédentes, suivant lequel la matière polymère assemblée par fusion a, avant l'étape de réticulation, une teneur en gel, telle que mesurée par le procédé d'essai ANSI/ASTM D2765—68, inférieure à 5%.

14. Un procédé selon l'une quelconque des revendications 1 à 3, suivant lequel ledit substrat auquel ladite partie dudit corps est assemblée est une autre partie dudit corps.

15. Un procédé selon l'une quelconque des revendications 1 à 3, suivant lequel ledit substrat auquel une partie dudit corps est assemblée est initialement séparé dudit corps.

16. Un objet formant obturation enveloppante thermorestaurable comprenant un corps (3) en une matière polymère à reprise thermique qui a été réticulé après déformation à une température inférieure au point de ramollissement de la matière polymère, dont des parties sont assemblées à un substrat en une matière polymère pour produire la configuration d'un dispositif de fermeture (1) le long d'une au moins de deux régions de bord opposées du corps, les parties formant la zone d'assemblage du corps et du substrat étant réticulées entre elles.

17. Une obturation selon la revendication 16, dans laquelle ledit dispositif de fermeture comprend une paire de nervures (1a, 1b) dont chacune est disposée le long d'une région de bord du corps et qui sont conçues pour coopérer dans l'obturation assemblée pour former une barre sur laquelle on peut positionner un profilé en U (7) pour maintenir l'obturation intacte.

18. Une obturation selon la revendication 17, dans laquelle chacune desdites nervures est formée à partir d'une bande de matière polymère constituant ledit substrat qui est assemblée à la matière polymère déformée dudit corps.

19. Une obturation selon la revendication 17, dans laquelle chacune desdites nervures est formée à partir d'une région de bord du corps de matière polymère déformée qui a été enveloppée autour d'un gabarit rigide (5a, 5b) et maintenue en place par assemblage à elle-même et/ou au gabarit, la partie du corps et/ou du gabarit avec laquelle l'assemblage est effectué constituant ainsi ledit substrat.

20. Une obturation selon l'une quelconque des revendications 16 à 19, dans laquelle le ou un dispositif de fermeture est écarté d'un bord de la matière polymère pour former un volet (4) de telle sorte que, lors de l'assemblage, le volet est disposé au-dessous de la jonction de l'obturation enveloppante.

21. Une obturation selon l'une quelconque des revendications 16 à 20, dans laquelle le corps et le substrat sont assemblés par fusion l'un a l'autre ou à une matière de plus qui est réticulé à la matière dudit corps et dudit substrat.

## Patentansprüche

1. Verfahren zum Herstellen eines durch Wärme schrumpfbaren Wickelverschlusses mit einem Verschließelement längs mindestens eines von zwei einander gegenüberliegenden Randbereichen der Teile, wobei ein Hauptteil (2) aus schmelzverschweißbarem Polymermaterial bei einer unterhalb des Erweichungspunktes des Materials liegenden Temperatur verformt wird, um ihn wärmeschrumpfbar zu machen, Abschnitte des Hauptteils mit einem Substrat aus schmelzverschweißbarem Polymermaterial verbunden werden, um das genannte Verschließelement (1) zu formen, und die die Verbindung herstellenden Teile des verformten Hauptteils und das Substrat miteinander vernetzt werden.

2. Verfahren nach Anspruch 1, wobei das verformte schmelzverschweißbare Polymermaterial als Bahn vorliegt.

3. Verfahren nach Anspruch 1 oder 2, wobei das genannte Verschließelement zwei Rippen (1a, 1b) aufweist, die sich jeweils längs eines Randbereichs des Hauptteils erstrecken und die in dem zusammengesetzten Wickelverschluß zusammenwirken, um eine Schiene zu bilden, auf die eine Rinne (7) gesetzt werden kann, um den Verschluß intakt zu halten.

4. Verfahren nach Anspruch 3, wobei die genannten Rippen jeweils aus einem Streifen des Polymermaterials gebildet sind, aus dem das genannte Substrat besteht, das mit dem verformten Polymermaterial des genannten Hauptteils verbunden ist.

5. Verfahren nach Anspruch 3, wobei die genannten Rippen jeweils aus einem Randbereich des Hauptteils aus verformtem Polymermaterial gebildet werden, der um einen starren Formkern (5a, 5b) gewickelt ist und festgehalten wird durch Verkleben an sich selbst und/oder an dem Formkern, so daß der Teil des Hauptteils und/oder des Formkerns, an dem die Verschweißung vorgenommen wurde, das genannte Substrat bilden.

6. Verfahren nach einem der vorhergehenden Ansprüche, wobei das oder ein Verschließelement sich in Abstand von dem Rand des Polymermaterials befindet und eine Lasche (4) bildet derart, daß die Lasche beim Zusammensetzen unter den Wickelverschluß zu liegen kommt.

7. Verfahren nach einem der Ansprüche 1 bis 6, wobei das Verkleben durch Schmelzen des genannten Polymermaterials erfolgt.

8. Verfahren nach einem der Ansprüche 1 bis 7, wobei das die Verklebung bewirkende Material auch noch weiteres Material neben dem genannten Hauptteil und dem genannten Substrat umfaßt, und die Vernetzung das genannte weitere Material mit demjenigen des genannten Hauptteils und des genannten Substrats vernetzt.

9. Verfahren nach einem der vorhergehenden Ansprüche, wobei beim Vernetzen praktisch das gesamte Polymermaterial zusätzlich zu dem die Verklebung bildenden Material vernetzt wird.

10. Verfahren nach einem der vorhergehenden Ansprüche, wobei das Vernetzen nach dem Verformen und dem Verkleben erfolgt.

11. Verfahren nach einem der Ansprüche 1 bis 9, wobei das Vernetzen nach dem Verformen und während des Verklebens erfolgt.

12. Verfahren nach einem der Ansprüche 1 bis 11, wobei das Verkleben nach dem Verformen erfolgt.

13. Verfahren nach einem der vorhergehenden Ansprüche, wobei das schmelzverschweißbare Polymermaterial vor dem Vernetzen einen Gelgehalt unter 5% hat (gemessen nach dem Testverfahren ANSI/ASTM D2765—68).

14. Verfahren nach einem der Ansprüche 1 bis 3, wobei das genannte Substrat, mit dem ein Abschnitt des genannten Hauptteils verklebt wird, ein weiterer Abschnitt des genannten Hauptteils ist.

15. Verfahren nach einem der Ansprüche 1 bis 3, wobei das genannte Substrat, mit dem ein Teil des genannten Hauptteils verklebt wird, zunächst unabhängig von dem genannten Hauptteil ist.

16. Wärmeschrumpfbarer Wickelverschluß mit einem Hauptteil (2) aus wärmeschrumpfbarem Polymermaterial, das nach dem Verformen bei einer unter dem Erweichungspunkt des Polymermaterials liegenden Temperatur vernetzt worden ist, von dem Abschnitte mit einem Substrat aus Polymermaterial schmelzverschweißt sind, um ein Verschließelement (1) längs mindestens eines von zwei einander gegenüberliegenden Randbereichen des Hauptteils zu formen, wobei die Verschweißungsabschnitte des Hauptteils und das Substrat miteinander vernetzt sind.

17. Verschluß nach Anspruch 16, wobei das genannte Verschließelement zwei Rippen (1a, 1b) aufweist, die jeweils längs eines Randbereichs des Hauptteils angeordnet sind und die in dem zusammengesetzten Wickelverschluß in der Weise zusammenzuwirken vermögen, daß eine Schiene gebildet wird, über die eine Rinne (7) gesetzt werden kann, um den Verschluß intakt zu halten.

18. Verschluß nach Anspruch 17, wobei die genannten Rippen jeweils aus einem Streifen des das genannte Substrat bildenden Polymermaterials bestehen, das mit dem verformten Polymermaterial des genannten Hauptteils verschweißt wird.

19. Verschluß nach Anspruch 17, wobei die genannten Rippen jeweils aus einem Randbereich des Hauptteils aus verformtem Polymermaterial hergestellt sind, das um einen starren Formkern (5a, 5b) gewickelt ist und durch Verkleben mit sich selbst und/oder dem Formkern an seinem Platz festgehalten wird, wobei der Teil des Hauptteils und/oder der Formkern, an dem die Verklebung vorgenommen worden ist, das genannte Substrat bilden.

20. Verschluß nach einem der Ansprüche 16 bis 19, wobei das oder ein Verschließelement Abstand von einem Rande des Polymermaterials hat, so daß eine Lasche (4) in der Weise gebildet wird, daß die Lasche beim Zusammensetzen unter den Wickelverschluß zu liegen kommt.

21. Verschluß nach einem der Ansprüche 16 bis 20, wobei der Hauptteil und das Substrat miteinander oder mit einem weiteren Material schmelzverschweißt sind, das mit dem Material des Hauptteils und dem Substrat vernetzt ist.

Fig.1.

Fig.2.

Fig.3.

Fig.4.

Fig.5.

1

Fig.6.

1b  1a  7

4

2

Fig.7.

7

1

8

8

9

Fig.7A.

1

1

8

9

8

9

0 045 213

Fig. 8.

Fig. 9.